# EUROPÄISCHE PATENTSCHRIFT

(11) **EP 0 802 155 B1**
(45) Veröffentlichungstag und Bekanntmachung des Hinweises auf die Patenterteilung: **09.10.2002**
(21) Anmeldenummer: 97105969.6
(22) Anmeldetag: 11.04.1997
(51) Int. Cl.: B67D 1/00, B01F 3/04

(54) **Verfahren und Vorrichtung zum Karbonisieren von Trinkwasser**
Method and device for carbonating of drinking water
Procédé et dispositif de et carbonatation d'eau potable

(30) Priorität: 16.04.1996 DE 19614754
(43) Veröffentlichungstag der Anmeldung: 22.10.1997
(73) Patentinhaber: STADTWERKE DUSSELDORF AG., D-40215 Düsseldorf (DE)
(72) Erfinder: Oesterwind, Dieter, 52428 Jülich (DE); Irmscher, Rudolf, 52353 Düren (DE)
(74) Vertreter: Bergen, Klaus, Dipl.-Ing.

(56) Entgegenhaltungen:
- EP-A- 0 278 773
- EP-A- 0 682 979
- DE-U- 29 608 761
- GB-A- 674 285
- GB-A- 1 274 455
- US-A- 3 256 802
- US-A- 3 730 500
- US-A- 3 765 318
- US-A- 5 417 147

## Beschreibung

Die Erfindung betrifft ein Verfahren zum CO₂-Anreichern von Trinkwasser sowie eine dafür geeignete Vorrichtung, insbesondere zum kontinuierlichen Aufbereiten und portionsweisen Ausgeben von Trinkwasser.

Wenn im folgenden von "Karbonisieren" gesprochen wird, ist damit das vorerwähnte CO₂-Anreichern gemeint.

Derartige Verfahren und Vorrichtungen sind in verschiedenen Ausführungen bekannt, wobei es sich durchweg um diskontinuierliche Verfahren handelt. Darüber hinaus sind die meisten derartigen Geräte nicht für den Besitz beim Endverbraucher geeignet, was vor allem mit dem für die Kühlung und Karbonisierung erforderlichen großvolumigen Vorrats- und Kühlbehälter zusammenhängt.

So wird mit der internationalen Patentanmeldung WO 94/05407-A1 eine Vorrichtung zum Bereiten und Ausgeben von Erfrischungsgetränken vorgeschlagen, bei der Trinkwasser in einen mit CO₂ gefluteten Behälter gefördert wird, in dem der Wasserstand über Sensoren erfaßt und in Abhängigkeit vom jeweiligen Verbrauch zwischen einem Minimal- und einem Maximalwert gehalten wird. In diesem Zwischen-Vorratsbehälter ist eine von einem Elektromotor angetriebene Umwälzpumpe untergebracht, die aus dem über dem Wasservorrat befindlichen Gaspolster CO₂-Gas absaugt und in das bevorratete Wasser im Bereich der Pumpe einmischt. Außen am Vorratsbehälter sind Kühlschlangen befestigt, die Teil eines Kühlsystems sind und dafür sorgen, daß sich innerhalb des Vorratsbehälters an dessen Seitenwänden ein Eismantel ausbildet, dessen Dicke gemessen wird und als Steuergröße für die Kühlleistung dient. Dem Vorratsbehälter kann dann darin karbonisiertes und gekühltes Wasser entnommen werden.

Abgesehen von dem ersichtlich erheblichen technischen Aufwand und dem erforderlichen Gerätevolumen, die dieses Gerät für den Endverbraucher insbesondere als Haushaltsgerät ungeeignet machen, haften dem bekannten Aufbereiter auch erhebliche Nachteile an, die insbesondere darin bestehen, daß bei der Soll-Ausgabegeschwindigkeit der Eismantel als Kältekapazitätsspeicher abschmilzt und nach dessen Aufbrauchen die Ausgabetemperatur nicht mehr auf dem gewünscht niedrigen Wert gehalten werden kann und außerdem bei Vorhandensein des Eismantels die Getränkeausgabetemperatur nicht regulierbar bei Temperaturen unter 4°C liegt.

Des weiteren ist aus der japanischen Veröffentlichung JP 53-094 270 ein Verfahren zum Karbonisieren und Lagern von Wasser bekannt, durch das vorzugsweise vorgekühltes und auf ein erhöhtes Druckniveau gebrachtes Wasser mit CO₂ vorversetzt und dann in einen ersten mit CO₂ gefluteten Druckbehälter geleitet und weiter angereichert und anschließend in einem weiteren, ebenfalls mit CO₂ gefluteten Speichertank aufgefangen und gelagert wird. Auch diese Karbonisieranlage bringt durch die Vielzahl seiner Komponenten und deren Größe den Nachteil mit sich, daß es als Haushaltsgerät ungeeignet ist. Darüber hinaus sind in diesem Fall zum Gaseinbringen mehrere Schritte erforderlich, nämlich zunächst während der Zuführung der Flüssigkeit, dann in einem weiteren Schritt in dem ersten mit CO₂ beaufschlagten Behälter eine Nachkarbonisierung und schließlich im Speichertank. Die Möglichkeit der direkten Ausgabe des aufbereiteten Wassers ist nicht gegeben, denn das Wasser muß zunächst den Speichertank durchlaufen.

In der DE 30 21 085-A1 wird eine Vorrichtung zum Imprägnieren von Wasser mit CO₂ dargestellt und beschrieben, bei welcher das CO₂ und das Wasser in einem eine Kühlschlange enthaltenden Behälter unter erhöhtem Druck derart zusammengeführt werden, daß das CO₂ durch Poren eines porösen Körpers austritt und von dem im Gegenstrom geführten Wasser aufgenommen wird.

Auch bei dieser Ausführungsform eines Karbonisiergerätes handelt es sich um ein mit einem CO₂ gefluteten Behälter arbeitendes Karbonisiergerät, mit den oben aufgeführten Nachteilen. Abgesehen davon, daß derartige Behälter viel Raum beanspruchen und sich nicht für Endverbraucher, insbesondere Haushalte eignen, ist auch mit dieser bekannten Vorrichtung wegen des erforderlichen Flüssigkeitspuffers eine kurzfristige Änderung des CO₂-Gehalts nicht möglich.

Die EP 0 278 773 A offenbart ein "beverage dispensing system" mit einem Mischer für Sirup, Sodawasser etc. Dabei ist das Befüllungs- und Kühlungssystem von der Entnahme unabhängig, also kein portionsweises Aufbereiten möglich. Nicht zuletzt aufgrund dieser Zielsetzung paßt dieser Vorschlag im wesentlichen unter den zuvor abgehandelten Stand der Technik, beispielsweise gemäß der internationalen Patentanmeldung W 94/05407-A1. Insbesondere ist auch hier ein hochkomplexer und aufwendiger Aufbau gegeben.

Andererseits sind zwar hinsichtlich ihrer Abmessungen als Haushaltsgeräte für den Endverbraucher geeignete Karbonisiereinrichtungen auf dem Markt, sogenannte Lanzenkarbonisiergeräte, bei denen jedoch die Handhabung insofern relativ umständlich ist, als in speziellen Behältnissen Trinkwasser portionsweise zu karbonisieren ist, das zudem zum Einbringen größerer Mengen von CO₂ zuvor separat gekühlt werden muß, da die Löslichkeit bei einer Temperaturerhöhung von 10° um ca. 30 % abnimmt.

Der Erfindung liegt das Problem zugrunde, ein Verfahren vorzuschlagen, das eine kontinuierliche Karbonisierung von Trinkwasser ermöglicht und die Basis für eine Vorrichtung darstellt, die als bedienungsfreundliches Gerät in jedem Haushalt unterzubringen ist und dem Verbraucher ein becherweises Zapfen von gewünscht unterschiedlichen Kohlensäuregehalt aufweisendem, gegebenenfalls gekühltem Trinkwasser ermöglicht.

Diese Aufgabe wird erfindungsgemäß bei einem Verfahren mit den im Patentanspruch 1 angegebenen Maßnahmen und für eine Vorrichtung mit den im Patentanspruch 21 angegebenen Merkmalen gelöst. Der der Erfindung zugrundeliegende Gedanke des In-Line-Durchlaufverfahrens mit dem Karbonisieren und dem vorzugsweise ebenfalls während des Zapfens erfolgenden Kühlen des dem Leitungsnetz zu entnehmenden Trinkwassers, das dann am Ende aufbereitet in jeweils gewünschter Menge gezapft werden kann, ist in verschiedenen Modifikationen zu realisieren.

So wird für das Kühlen entweder eine Kompressionskühlanlage oder eine Peltierkühlanlage vorgeschlagen.

Ein besonderes Merkmal der Erfindung ist die im Durchlauf erfolgende Karbonisierung, die vorzugsweise nach dem Injektorprinzip erfolgt, d.h. CO₂ wird nicht wie beim Stand der Technik unter Druck mit Hilfe einer Lanze eingedüst oder in einem Druckbehälter eingemischt, sondern vom gekühlten, den Injektor mit hoher Geschwindigkeit passierenden Trinkwasser angesaugt und in der anschließenden Mischstrecke - einer Zone hoher Turbulenz - vom Trinkwasser absorbiert.

Da, wie bereits erwähnt, die CO₂-Löslichkeit im Wasser temperaturabhängig ist, kann bei entsprechend niedrigen Trinkwassertemperaturen im Versorgungsnetz eine Kühlung während der Aufbereitung entfallen oder erst nach der Karbonisierung erfolgen.

Der übliche Druck in den Versorgungsnetzen wird vorzugsweise zumindest über einen Teil der Prozeßstrecke als Förderdruck genutzt, der dann zum Erzielen der gewünschten Turbulenz im Injektor bzw. der sich diesem anschließenden Mischstrecke zum Erzielen einer möglichst großen Kontaktfläche CO₂/Wasser für die Begünstigung der CO₂-Absorption vor dem Injektor erhöht werden kann.

Um in diesem Bereich, d.h. vom Injektor bis zur Zapfstelle den erhöhten Druck sowohl zur Verhinderung einer Entmischung als auch im Interesse einer optimalen Karbonisierung aufrechtzuerhalten, ist diese Strecke einerseits durch geeignete Maßnahmen gegenüber der Kühlstrecke druckgesichert und andererseits mit einer die der Druckerhöhung dienende Pumpe steuernden Druckmeßstelle versehen, so daß im Fall des Zapfens mit der Folge des Abfallens des Drucks unter einen gewünschten Wert die Pumpe zur Erhöhung des Drucks in der erwähnten Strecke eingeschaltet wird.

Vorteilhafterweise ist am Injektor bzw. dem diesem nachgeschalteten Mischrohr in der CO₂-Zuführungsleitung eine Mengenregelung vorgesehen, mit der die dem Injektor zugeführte CO₂-Menge in der gewünschten Weise eingestellt werden kann, so daß das gezapfte Getränk von "still" bis "prickelnd" nahezu becherweise variiert werden kann.

Bei entsprechend hohem Druck im Trinkwasser-Versorgungsnetz kann das Karbonisieren und gegebenenfalls Kühlen auch gänzlich ohne Druckerhöhung durchgeführt werden, also eine Druckerhöhungspumpe entfallen. Schließlich kann aber auch eine Druckerhöhung erst dann vorgenommen werden, wenn das Trinkwasser bereits gekühlt und/oder karbonisiert ist.

Die Maßnahmen und Merkmale nach der Erfindung ermöglichen nicht nur einen leicht überschaubaren, bedienungsfreundlichen und geringvolumigen Geräteaufbau, sondern auch eine modulare Komponentenkombination, die zu einem Kleingerät für Endverbraucher führt, das verschiedenen Anschlußbedingungen sowie Kundenwünschen bezüglich Kühltemperatur, Durchfluß etc. anzupassen sowie im gewünschten Umfang nachzurüsten ist. Dabei ist, wie sich aus den vorstehenden Ausführungen ergibt, auch die Möglichkeit vorgesehen, die Komponenten der Prozeßstrecke in einer anderen als der beschriebenen Reihenfolge anzuordnen. Insbesondere kann die Pumpe, wenn überhaupt erforderlich, an irgendeiner geeigneten Stelle des Aufbereitungsweges angeordnet sein, wodurch z.B. der Netzdruck über einen Teil der Prozeßstrecke als Förderdruck genutzt werden kann.

Anhand der beigefügten Zeichnungen, die bevorzugte Ausführungsbeispiele darstellen, wird die Erfindung nachfolgend näher erläutert. Es zeigen:
- Fig. 1: ein Fließschema des erfindungsgemäßen Verfahrens;
- Fig. 2: das Fließschema gemäß Fig. 1 mit Kompressionskühlung;
- Fig. 3: das Fließschema gemäß Fig. 1 mit Peltierkühlung; und
- Fig. 4: einen erfindungsgemäßen Injektor.

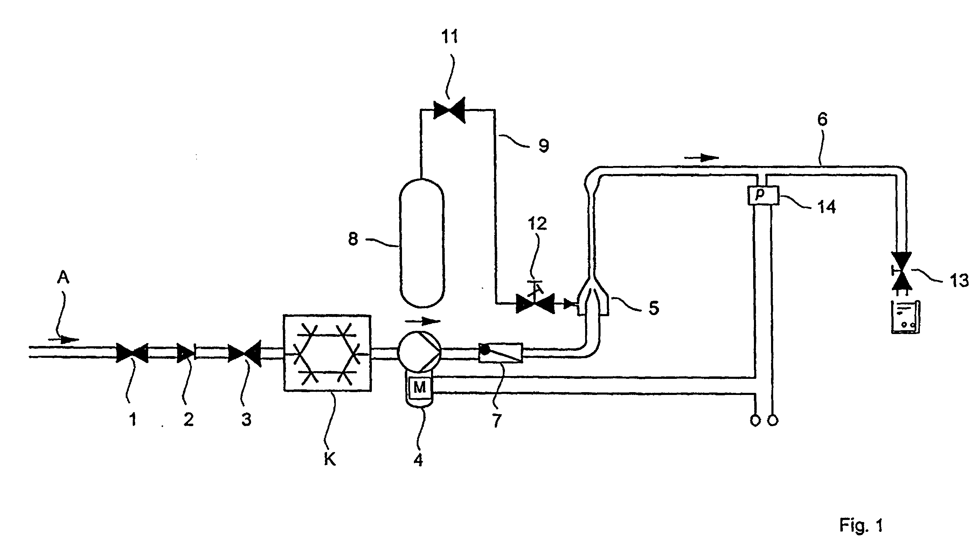

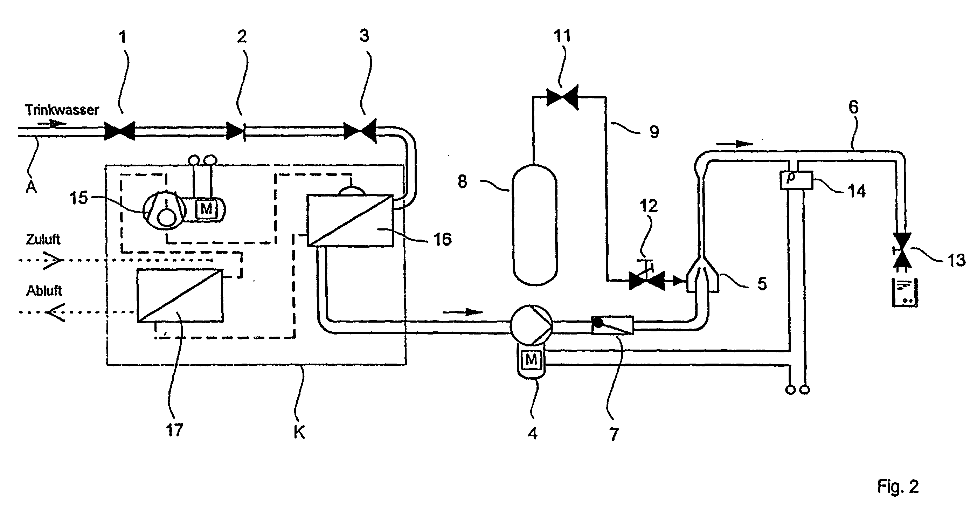

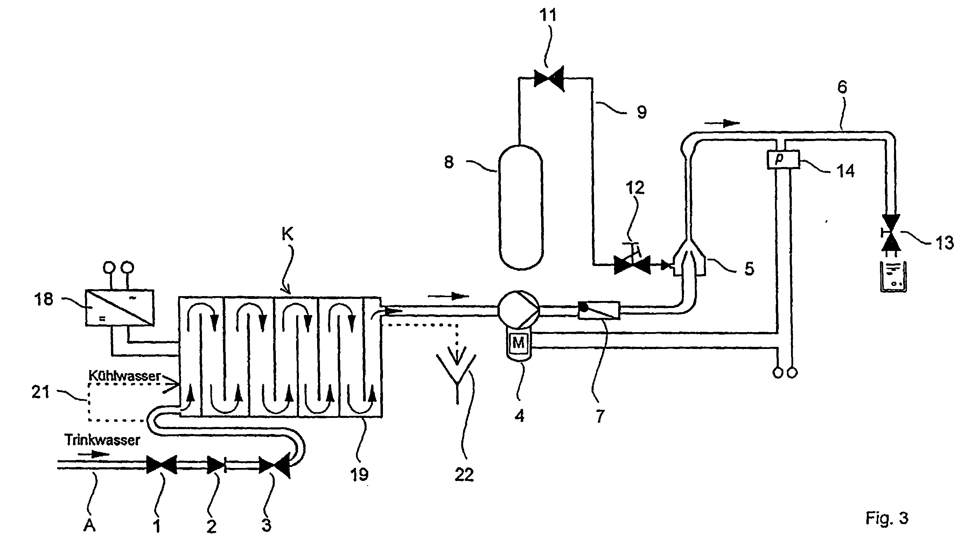

Wie aus Fig. 1 hervorgeht, ist das erfindungsgemäße Verfahren in dieser Ausführungsform im wesentlichen in zwei Grundstufen einzuteilen, nämlich einerseits die Kühlung und andererseits die Karbonisierung. Die Kühlstufe ist im Fließschema gemäß Fig. 1 generell mit K bezeichnet und wird anhand der Fig. 2 und 3 nachfolgend noch näher erläutert, da dafür im Rahmen der Erfindung zwei Alternativen vorgesehen sind, nämlich einerseits eine Kompressionskühlung (Fig. 2) und andererseits eine Peltierkühlung (Fig. 3).

Sowohl die Kühlung von und der CO₂-Eintrag ins Trinkwasser im mit der Erfindung angestrebten Endverbrauchermaßstab findet im Durchströmverfahren (In-Line) statt, wobei für die Karbonisierung im Rahmen der Erfindung vorzugsweise das Injektorprinzip vorgeschlagen wird.

Das Trinkwasser wird über einen entsprechenden Anschluß dem vorhandenen Versorgungsnetz unmittelbar entnommen und gemäß dem Pfeil A durch eine Absperrarmatur 1 und einen Rückflußverhinderer 2 einem Druckminderventil 3 zugeführt, das den Wasserdruck auf einen definierten Eingangsdruck, von beispielsweise 2 bis 3 bar, reduziert, um für das Aufbereitungsverfahren unabhängig vom Druck im Versorgungsnetz gleiche Ausgangsbedingungen zu haben, insbesondere damit auch die Druck(-bereichs)-schalter einwandfrei und reproduzierbar schalten. Danach erfolgt die Kühlung in nachfolgend noch näher zu beschreibender Weise, wobei festzuhalten ist, daß bis zur Beendigung der Kühlung der Netzdruck für die Förderung des aufzubereitenden Trinkwassers sorgt.

Nach beendeter Kühlung wird der Systemdruck im Übergangsbereich zum CO₂-Eintrag mittels einer Pumpe 4 auf einen für den CO₂-Eintrag optimalen Druck (z.B. 7,3 bis 7,5 bar) erhöht.

Bei der Gasabsorption - einem physikalischen Lösungsvorgang - sind die Wassertemperatur und der Systemdruck CO₂/Wasser die entscheidenden Parameter. Je niedriger die Wassertemperatur und je höher der Systemdruck ist, desto mehr CO₂-Gas kann im Trinkwasser gelöst werden.

Dabei ist als weiterer wesentlicher Parameter für den zeitlichen Ablauf des CO₂-Eintrages die Größe der Kontaktfläche CO₂/Wasser zu berücksichtigen, wobei eine möglichst große Kontaktfläche die Absorptionszeit verkürzt.

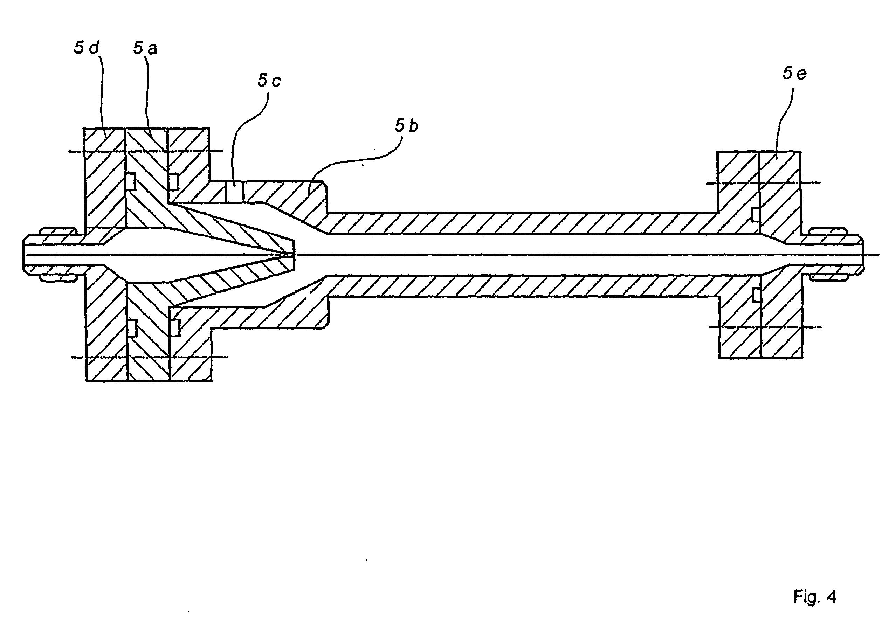

Mit dem erfindungsgemäßen Injektorprinzip wird nun in überraschend einfacher Weise eine Möglichkeit geschaffen, durch die beschriebene Druckerhöhung im Injektor 5 im Bereich seiner Düse 5a (siehe Fig. 4) die Wassergeschwindigkeit so zu erhöhen, daß im nachfolgenden Mischrohr 5b, in das die Injektordüse 5a hineinragt, eine Zone höchster Turbulenz geschaffen wird. Ein Injektoreingangsdruck von ungefähr 7 bar stellt einen günstige Ergebnisse liefernden Wert dar.

Wie die Figuren zeigen, wird vom Injektor CO₂ angesaugt und zwar im Übergangsbereich zwischen Injektordüse 5a und Mischrohr 5b durch die im Mischrohrflansch vorgesehene Zufuhröffnung 5c. Aufgrund des Injektoreingangsdrucks wird die Fließgeschwindigkeit des Wassers in der Injektordüse so erheblich erhöht, daß CO₂ in gewünschtem Umfang durch den am Düsenende entstehenden Unterdruck angesaugt und unter großen Turbulenzen ins Mischrohr gefordert wird, wo eine intensive Absorption des CO₂-Gases stattfindet, da die beiden Parameter Temperatur und Oberflächenverhältnis des Trinkwassers im Sinne einer Maximierung der Absorption eingestellt sind.

Um zu verhindern, daß beim Stillstand der Pumpe 4 ein Wasserrückfluß in Richtung Kühlstufe passiert und im Zapfstrang 6 der Druck absinkt, ist zwischen der Druckerhöhungspumpe 4 und dem Injektor 5 eine Rückschlagarmatur 7 angeordnet.

Das erfindungsgemäße Gerät kann mit mindestens einem CO₂-Vorratsbehälter (Gasflasche) 8 handelsüblicher Größe ausgerüstet sein, der über eine Versorgungsleitung 9, die bei 5c in das Mischrohr 5b mündet, an den Injektor 5 angeschlossen ist. Die Gasflasche 8 kann zur Handhabungsvereinfachung mit einer schraublosen Anschlußmöglichkeit versehen sein. In der Leitung 9 befindet sich ein Druckminderer 11, der das Gas auf beispielsweise 4,5 bar Arbeitsdruck zum Einsaugen in den Injektor 5 entspannt. Die dem Injektor zugeführte CO₂-Menge läßt sich durch eine Durchflußmengenbegrenzung, z.B. ein Nadelventil 12, einfach einstellen, so daß nahezu becherweise das ausgegebene Getränk zwischen "still" und "prickelnd" variiert werden kann; dabei kann der CO₂-Gehalt des Wassers zwischen 0 und ca. 6 g/l eingestellt werden.

Am Ende des Zapfstrangs befindet sich das Zapfventil 13, das der becherweisen Ausgabe des gekühlten, CO₂-haltigen Trinkwassers dient. Im Zapfstrang 6 befindet sich ein Druckschalter 14. Sobald das Zapfventil geöffnet wird, sinkt der Druck im Zapfstrang 6. Wird nun ein vorbestimmter Druck von beispielsweise 4,5 bar unterschritten, schaltet der Druckschalter 14 die Druckerhöhungspumpe 4 ein, so daß der für die gewünschte Turbulenz im Injektor erforderliche Druck aufrechterhalten bleibt. Nach Schließen des Zapfventils 13 am Ende der Entnahme fördert die Pumpe 4 solange weiter, bis bei Erreichen des oberen festgelegten Druckes von beispielsweise ungefähr 5,5 bar der Druckschalter 14 die Pumpe 4 wieder abschaltet. Auf diese Weise wird stets ein Mindestdruck - hier von 4 bar - gehalten und damit ein Entmischen von CO₂ und Wasser unterdrückt.

Zur Unterstützung einer gleichmäßigen Entnahme mit gleicher Wasserqualität kann am Zapfventil 13 als Gegendruck ein Kompensator angebracht oder in das Zapfventil integriert sein, der den Druck derart steuert, daß der Mischprozeß optimiert wird.

In Fig. 2 ist das Fließschema für ein erfindungsgemäßes Gerät mit Kompressionskühlung K dargestellt, wobei alle übrigen Teile entsprechend Fig. 1 ausgelegt sind, so daß deren Erläuterung nicht wiederholt zu werden braucht. Die Kompressionskälteanlage arbeitet in bekannter Weise, und zwar mit Luftrückkühlung, wobei 15 den Verdichter, 16 den Verdampfer und 17 den Kondensator bezeichnen.

Die alternativ einsetzbare Peltierkühlanlage K ist in Fig. 3 dargestellt, wobei wiederum die übrigen Teile wie bereits im Zusammenhang mit Fig. 1 erläutert, vorgesehen sind. Die Peltierkühlanlage ist in ihrem grundsätzlichen Aufbau bekannt. Ein Netzgerät 18 versorgt die Peltierelemente, die an einem Metallblock mit versetzter Kühlverrippung angebracht sind, der in einem Trinkwasserdurchflußgehäuse 19 untergebracht ist. Für die Rückkühlung der Peltierelemente wird dem vom Netz kommenden, aufzubereitenden Trinkwasser ein Teilstrom 21 entnommen, der nach Durchlauf der Kühllamellen in einen Abfluß 22 gelangt. Durch den als Kühlwasser genutzten, fließenden Teilstrom 21 des aufzubereitenden Trinkwassers wird im übrigen vorteilhafterweise dem Stagnationsproblem begegnet, da dadurch das Trinkwasser in der Zuleitung nicht völlig steht.

Die in Fig. 4 dargestellte mögliche Ausführung eines Injektors 5 bestehend aus der Injektordüse 5a, die in das Mischrohr 5b hineinragt, in das bei 5c CO₂ angesaugt und in dem das CO₂ dann mit dem in der Injektordüse hochbeschleunigten Trinkwasser vermischt wird, ist auf der Zuflußseite mit einem Hochdruckendflansch 5d und auf der Abflußseite mit einem Niederdruckendflansch 5e verschraubt, so daß sich ein leicht montierbares, an jeder gewünschten Stelle der Leitung einsetzbares Bauteil ergibt.

Mit der Erfindung wird ein für den Endverbraucher bedienungsfreundliches Gerät geschaffen, das im Gegensatz zu bisherigen Geräten einerseits durch den Wegfall einer separaten Vorkühlung in Spezialbehältern eine besonders einfache Handhabung ermöglicht und andererseits eine konstante Ausgabeleistung sowohl hinsichtlich des CO₂-Gehalts als auch der Getränketemperatur garantiert, was aus zuvor bereits erläuterten Gründen bei den bekannten Großgeräten nicht der Fall ist. Darüber hinaus wird mit der Erfindung erstmals eine annähernd becherweise Dosiermöglichkeit des CO₂-Gehaltes geschaffen. Dies ist mit den derzeitigen Geräten nicht möglich, da diese eine je nach Entnahmegeschwindigkeit nicht konstante CO₂-Menge in das Wasser im dort erforderlichen, bei der Erfindung überflüssigen Vorratsbehälter einbringen. Das erfindungsgemäße In-Line-Durchlaufverfahren ist ohne Zwischenspeicher möglich, schafft damit endverbrauchergeeignete Abmessungen und eröffnet durch den modularen Aufbau von Kühlung und CO₂-Eintrag Erweiterungsmöglichkeiten bereits bestehender Trinkwasserkühlgeräte oder auch den Betrieb des CO₂-Eintrages ohne Kühlung.

Darüber hinaus sind verschiedenartige Um- und Ausbaumöglichkeiten denkbar, insbesondere, wenn die einzelnen Behandlungsstufen in sich geschlossene, vielfältig kombinierbare Module darstellen, so daß beispielsweise an eine einzige Kühleinheit mehrere Karbonisiereinheiten mit mehreren Zapfstellen angeschlossen werden können, wobei auch hier die Kühlung und Karbonisierung des Trinkwassers in beliebiger Reihenfolge (erst Kühlen, dann Karbonisieren oder erst Karbonisieren und dann Kühlen oder auch Karbonisieren während des Kühlens, wobei dann der CO₂-Injektor in die Kühlschlange bzw. das Kühlaggregat integriert werden könnte) durchgeführt werden können, und zwar mit und ohne Systemdruckerhöhung.

## Patentansprüche

1. Verfahren zum Karbonisieren (CO₂-Anreichern) von Trinkwasser, bei dem
- im **bevorratungslosen** Durchlaufverfahren
- dem Leitungsnetz entnommenes Trinkwasser **portionsweise** während des Zapfens
- karbonisiert wird.

2. Verfahren nach Anspruch 1, **dadurch gekennzeichnet, daß** das Trinkwasser während des Zapfens auf dem Förderweg gekühlt wird.

3. Verfahren nach Anspruch 1 oder 2, **dadurch gekennzeichnet, daß** das Karbonisieren nach dem Kühlen erfolgt.

4. Verfahren nach Anspruch 1 oder 2, **dadurch gekennzeichnet, daß** das Karbonisieren vor dem Kühlen erfolgt.

5. Verfahren nach Anspruch 1 oder 2, **dadurch gekennzeichnet, daß** das Karbonisieren während des Kühlens erfolgt.

6. Verfahren nach einem der Ansprüche 1 bis 5, **dadurch gekennzeichnet, daß** eine Kompressionskühlanlage (15, 16, 17) eingesetzt wird.

7. Verfahren nach einem der Ansprüche 1 bis 5, **dadurch gekennzeichnet, daß** eine Peltierkühlanlage (18, 19) eingesetzt wird.

8. Verfahren nach Anspruch 7, **dadurch gekennzeichnet, daß** ein Teil (21) des aufzubereitenden Trinkwassers im by-pass als Kühlwasser durch die Peltierkühlanlage (18, 19) geführt wird.

9. Verfahren nach einem der Ansprüche 1 bis 8, **dadurch gekennzeichnet, daß** der CO₂-Eintrag nach dem Injektorprinzip erfolgt.

10. Verfahren nach Anspruch 9, **dadurch gekennzeichnet, daß** das CO₂ im Injektor vom diesen mit erhöhter Geschwindigkeit passierenden Trinkwasser angesaugt und unter Turbulenz in der sich anschließenden Mischstrecke vom Trinkwasser absorbiert wird.

11. Verfahren nach einem der Ansprüche 1 bis 10, **dadurch gekennzeichnet, daß** der Netzdruck zumindest über einen Teil der Prozeßstrecke als Förderdruck genutzt wird.

12. Verfahren nach einem der Ansprüche 1 bis 11, **dadurch gekennzeichnet, daß** der Systemdruck zumindest über einen Teil der Prozeßstrecke erhöht wird.

13. Verfahren nach Anspruch 12, **dadurch gekennzeichnet, daß** der Systemdruck erhöht wird, nachdem das Trinkwasser gekühlt und/oder karbonisiert worden ist.

14. Verfahren nach Anspruch 12, **dadurch gekennzeichnet, daß** der Systemdruck nach dem Kühlen und vor dem Karbonisieren des Trinkwassers erhöht wird.

15. Verfahren nach Anspruch 12, **dadurch gekennzeichnet, daß** der Systemdruck nach dem Karbonisieren und vor dem Kühlen erhöht wird.

16. Verfahren nach einem der Anspruche 1 bis 15, **dadurch gekennzeichnet, daß** der CO₂-Eintrag gewünscht variabel erfolgt.

17. Verfahren nach einem der Ansprüche 1 bis 16, **dadurch gekennzeichnet, daß** der CO₂-Eintrag becherweise unterschiedlich eingestellt werden kann.

18. Verfahren nach einem der Ansprüche 1 bis 17, **dadurch gekennzeichnet, daß** im Prozeßstreckenbereich des CO₂-Eintrags die Durchflußgeschwindigkeit des Trinkwassers erhöht wird.

19. Verfahren nach einem der Ansprüche 1 bis 18, **dadurch gekennzeichnet, daß** das Trinkwasser nach dem CO₂-Eintrag einen Stabilisierungsabschnitt (5b,6) durchläuft.

20. Verfahren nach einem der Ansprüche 1 bis 19, **dadurch gekennzeichnet, daß** der Druck in der sich dem Kühlvorgang anschließenden Prozeßstrecke in Abhängigkeit von der Entnahme an karbonisiertem Wasser gesteuert wird.

21. Vorrichtung zum Durchführen des Verfahrens nach einem der Ansprüche 1 bis 20, insbesondere zum portionsweisen, vorzugsweise becherweisen Ausgeben und zeitgleichen, kontinuierlichen Aufbereiten von Trinkwasser mit
- mindestens einer an das Trinkwassernetz anzuschließenden Karbonisierstrecke und
- mindestens einer drucksteuernden Zapfstelle (13) am Ende des Zapfstrangs (6).

22. Vorrichtung nach Anspruch 21, **gekennzeichnet durch** eine an das Trinkwassernetz anzuschließenden Kühlanlage K.

23. Vorrichtung nach Anspruch 22, **dadurch gekennzeichnet, daß** die Karbonisierstrecke der Kühlanlage (K) nachgeschaltet ist.

24. Vorrichtung nach einem der Ansprüche 21 bis 23, **gekennzeichnet durch** eine Kompressionskühlanlage (15, 16, 17).

25. Vorrichtung nach einem der Ansprüche 21 bis 23, **gekennzeichnet durch** eine Peltierkühlanlage (18, 19).

26. Vorrichtung nach einem der Ansprüche 21 bis 25, **gekennzeichnet durch** einen von einer CO₂-Quelle (8) gespeisten, vom Trinkwasser durchströmten Injektor (5).

27. Vorrichtung nach Anspruch 26, **dadurch gekennzeichnet, daß** der Injektor (5) vom gekühlten Trinkwasser durchströmt wird.

28. Vorrichtung nach Anspruch 26 oder 27, **dadurch gekennzeichnet, daß** der Injektor (5) als Baueinheit aus einer mit ihrer Niederdruckseite in ein Mischrohr (5b) hineinragenden Injektordüse (5a) besteht.

29. Vorrichtung nach Anspruch 28, **dadurch gekennzeichnet, daß** die CO₂-Zufuhr regelbar in das Mischrohr (5b) erfolgt.

30. Vorrichtung nach Anspruch 29, **gekennzeichnet durch** ein Durchflußmengenregelventil (12) für die CO₂-Zufuhr aus einem Vorratsbehälter (8).

31. Vorrichtung nach einem der Ansprüche 21 bis 30, **gekennzeichnet durch** eine Druckerhöhungspumpe (4).

32. Vorrichtung nach Anspruch 31, **dadurch gekennzeichnet, daß** die Pumpe (4) der Karbonisierstrecke vorgeschaltet ist.

33. Vorrichtung nach einem der Ansprüche 21 bis 32, **gekennzeichnet durch** einen Druckwächter (14) in der Karbonisierstrecke.

34. Vorrichtung nach Anspruch 33, **dadurch gekennzeichnet, daß** der Druckwächter (14) die Druckerhöhungspumpe (4) in Abhängigkeit von der Trinkwasserentnahme schaltet.

35. Vorrichtung nach einem der Ansprüche 32 bis 34, **gekennzeichnet durch** eine Rückschlagarmatur (7) zwischen der Druckerhöhungspumpe (4) und dem Injektor (5).

36. Vorrichtung nach einem der Ansprüche 21 bis 35, **dadurch gekennzeichnet, daß** der Zapfstrang in die Karbonisierungsstrecke einbezogen wird.

37. Vorrichtung nach einem der Ansprüche 21 bis 36, **gekennzeichnet durch** einen Kompensator am Zapfhahn (Zapfventil) (13) als Drucksteuerer zum Optimieren des Mischprozesses.

38. Vorrichtung nach einem der Ansprüche 21 bis 37, **gekennzeichnet durch** einen schraublosen Anschluß des CO₂-Vorratsbehälters (8).

39. Vorrichtung nach einem der Ansprüche 21 bis 38 als Kleingerät für Endverbraucher.

40. Vorrichtung nach einem der Ansprüche 21 bis 39, **gekennzeichnet durch** einen modularen Aufbau.

41. Vorrichtung nach Anspruch 40, **gekennzeichnet durch** mehrere CO₂-Versorgungsmodule (8, 11).

42. Vorrichtung nach Anspruch 40 oder 41, **dadurch gekennzeichnet, daß** die gesamte Kühlanlage (K) als Modul-Baueinheit ausgebildet ist.

43. Vorrichtung nach Anspruch 42, **dadurch gekennzeichnet, daß** mindestens zwei CO₂-Versorgungsmodule gleichzeitig an das Kühlmodul angeschlossen sind.

44. Vorrichtung nach einem der Ansprüche 40 bis 43, **gekennzeichnet durch** mehrere Zapfhähne (Zapfventile) (13) als Entnahmestellen für aufbereitetes Trinkwasser.

## Claims

1. Method for carbonating (CO₂-enriching) drinking water, in which
- in a reserve-less through-flow process
- the drinking water taken from the mains supply is, in portions, whilst being drawn
- carbonated.

2. Method according to claim 1,
**characterized in that**,
whilst being drawn the drinking water is cooled along the path of flow.

3. Method according to claim 1 or 2,
**characterized in that**,
the carbonating is effected after the cooling.

4. Method according to claim 1 or 2,
**characterized in that**,
the carbonating is effected before the cooling.

5. Method according to claim 1 or 2,
**characterized in that**,
the carbonating is effected during the cooling.

6. Method according to any of claims 1 to 5,
**characterized in that**,
a compression-type cooling device (15, 16, 17) is employed.

7. Method according to any of claims 1 to 5,
**characterized in that**,
a Peltier cooling device (18, 19) is employed.

8. Method according to claim 7,
**characterized in that**,
a part (21) of the drinking water to be prepared is, in a by-pass procedure, passed through the Peltier cooling device (18, 19) as cooling water.

9. Method according to any of claims 1 to 8,
**characterized in that**,
the charging with CO₂ is effected in accordance with the injector principle.

10. Method according to claim 9,
**characterized in that**,
the CO₂ in the injector is drawn off by drinking water passing the injector with increased speed and is absorbed by the drinking water, under turbulence, in the subsequent mixing path.

11. Method according to any of claims 1 to 10,
**characterized in that**,
the mains pressure is exploited at least over a part of the process path as feed pressure.

12. Method according to any of claims 1 to 11,
**characterized in that**,
the system pressure is increased at least over a part of the process path.

13. Method according to claim 12,
**characterized in that**,
the system pressure is increased after the drinking water has been cooled and/or carbonated.

14. Method according to claim 12,
**characterized in that**,
the system pressure is increased after the cooling and before the carbonating of the drinking water.

15. Method according to claim 12,
**characterized in that**,
the system pressure is increased after the carbonating and before the cooling.

16. Method according to any of claims 1 to 15,
**characterized in that**,
the charging of the CO₂ is effected variably as desired.

17. Method according to any of claims 1 to 16,
**characterized in that**,
the CO₂ charging can be differently set, cup for cup.

18. Method according to any of claims 1 to 17,
**characterized in that**,
in the process path region of the CO₂ charging, the through-flow speed of the drinking water is increased.

19. Method according to any of claims 1 to 18,
**characterized in that**,
after the CO₂ charging, the drinking water flows through a stabilization section (5b, 6).

20. Method according to any of claims 1 to 19,
**characterized in that**,
the pressure in the process path following the cooling procedure is controlled in dependence upon the drawing off of carbonated water.

21. Device for carrying out the method according to any of claims 1 to 20, in particular for the serving of drinking water in portions, preferably cup by cup, and contemporaneous, continuous preparation of drinking water, having
- at least one carbonation path to be connected with the drinking water mains and
- at least one pressure-controlling dispensing point (13) at the end of the dispensing chain (6).

22. Device according to claim 21,
**characterized by** a cooling device K to be connected to the drinking water mains.

23. Device according to claim 22,
**characterized in that**,
the carbonation path is downstream of the cooling device (K).

24. Device according to any of claims 21 to 23,
**characterized by** a compression-type cooling device (15, 16, 17).

25. Device according to any of claims 21 to 23,
**characterized by** a Peltier cooling device (18, 19).

26. Device according to any of claims 21 to 25,
**characterized by** an injector fed from a CO₂ source (8), through which injector the drinking water flows.

27. Device according to claim 26,
**characterized in that**,
cooled drinking water flows through the injector (5).

28. Device according to claim 26 or 27,
**characterized in that**,
as structural unit the injector (5) consists of an injector jet (5a) projecting into a mixing pipe (5b) with its low pressure side.

29. Device according to claim 28,
**characterized in that**,
the CO₂ delivery into the mixing pipe is effected in a regulatable manner.

30. Device according to claim 29,
**characterized by** a through-flow quantity regulation valve (12) for the CO₂ delivery from a supply container (8).

31. Device according to any of claims 21 to 30,
**characterized by** a pressure raising pump (4).

32. Device according to claim 31,
**characterized in that**,
the pump (4) is upstream of the carbonation path.

33. Device according to any of claims 21 to 32,
**characterized by** a pressure monitor (14) in the carbonation path.

34. Device according to claim 33,
**characterized in that**,
the pressure monitor (14) operates the pressure raising pump (4) in dependence upon the drawing off of drinking water.

35. Device according to any of claims 32 to 34,
**characterized by** a non-return fitting (7) between the pressure raising pump (4) and the injector (5).

36. Device according to any of claims 21 to 35,
**characterized in that**,
the dispensing chain is included in the carbonation path (4).

37. Device according to any of claims 21 to 36,
**characterized by** a compensator at the dispensing tap (dispensing valve) (13) as pressure controller for optimizing the mixing process.

38. Device according to any of claims 21 to 37,
**characterized by** a thread-less connection of the CO₂ supply container (8).

39. Device according to any of claims 21 to 38, as domestic apparatus for the consumer.

40. Device according to any of claims 21 to 39,
**characterized by** a modular construction.

41. Device according to claim 40,
**characterized by** a plurality of CO₂ supply modules (7, 8, 11).

42. Device according to claim 40 or 41,
**characterized in that**,
the entire cooling device (K) is formed as a module component.

43. Device according to claim 42,
**characterized in that**,
at least two CO₂ supply modules are connected to the cooling module at the same time.

44. Device according to any of claims 40 to 43,
**characterized by** a plurality of dispensing taps (dispensing valves) (13) as take-off points for prepared drinking water.

## Revendications

1. Procédé de carbonatation (enrichissement en CO₂) d'eau potable, dans lequel, lors d'un procédé de passage sans entreposage, l'eau potable prélevée d'un réseau de distribution est carbonatée par portion pendant le puisage.

2. Procédé selon la revendication 1, **caractérisé en ce que** l'eau potable est refroidie sur le parcours pendant le puisage.

3. Procédé selon la revendication 1 ou 2, **caractérisé en ce que** la carbonatation se produit après le refroidissement.

4. Procédé selon la revendication 1 ou 2, **caractérisé en ce que** la carbonatation se produit avant le refroidissement.

5. Procédé selon la revendication 1 ou 2, **caractérisé en ce que** la carbonatation se produit pendant le refroidissement.

6. Procédé selon l'une des revendications 1 à 5, **caractérisé en ce que** l'on utilise une installation de refroidissement par compression (15, 16, 17).

7. Procédé selon l'une des revendications 1 à 5, **caractérisé en ce que** l'on utilise une installation de refroidissement par effet de Peltier (18, 19).

8. Procédé selon la revendication 7, **caractérisé en ce qu'**une partie (21) de l'eau potable à traiter est amenée dans la dérivation par l'installation de refroidissement par effet de Peltier (18, 19) en tant qu'eau de refroidissement.

9. Procédé selon l'une des revendications 1 à 8, **caractérisé en ce que** l'apport de CO₂ se produit selon le principe de l'injecteur.

10. Procédé selon la revendication 9, **caractérisé en ce que** le CO₂ est aspiré dans l'injecteur par l'eau potable qui y passe selon une vitesse augmentée et est absorbé par turbulence dans la section de mélange de l'eau potable qui s'y raccorde.

11. Procédé selon l'une des revendications 1 à 10, **caractérisé en ce que** la pression du réseau est exploitée en tant que pression de transport sur au moins une partie du parcours du procédé.

12. Procédé selon l'une des revendications 1 à 11, **caractérisé en ce que** la pression du système est augmentée sur au moins une partie du parcours du procédé.

13. Procédé selon la revendication 12, **caractérisé en ce que** la pression du système est augmentée après que l'eau potable a été refroidie et/ou carbonatée.

14. Procédé selon la revendication 12, **caractérisé en ce que** la pression du système est augmentée après le refroidissement et avant la carbonatation de l'eau potable.

15. Procédé selon la revendication 12, **caractérisé en ce que** la pression du système est augmentée après la carbonatation et avant le refroidissement.

16. Procédé selon l'une des revendications 1 à 15, **caractérisé en ce que** l'apport de CO₂ peut varier selon les souhaits.

17. Procédé selon l'une des revendications 1 à 16, **caractérisé en ce que** l'apport de CO₂ peut être réglé différemment par gobelet.

18. Procédé selon l'une des revendications 1 à 17, **caractérisé en ce que**, dans la zone du parcours du procédé de l'apport de CO₂, la vitesse d'écoulement de l'eau potable est augmentée.

19. Procédé selon l'une des revendications 1 à 18, **caractérisé en ce que** l'eau potable traverse un segment de stabilisation (5b, 6) après l'apport de CO₂.

20. Procédé selon l'une des revendications 1 à 19, **caractérisé en ce que** la pression dans le parcours du procédé qui se raccorde au mécanisme de refroidissement est commandée en fonction du prélèvement d'eau carbonatée.

21. Dispositif permettant de réaliser le procédé selon l'une des revendications 1 à 20, en particulier pour sortir par portion, de préférence par gobelet, et en même temps pour traiter en continu de l'eau potable, comportant
- au moins un parcours de carbonatation se raccordant au réseau d'eau potable, et
- au moins un point de puisage (13) à la fin de la ligne de puisage (6).

22. Dispositif selon la revendication 21, **caractérisé par** une installation de refroidissement K qui se raccorde au réseau d'eau potable.

23. Dispositif selon la revendication 22, **caractérisé en ce que** le parcours de carbonatation est intercalé après l'installation de refroidissement (K).

24. Dispositif selon l'une des revendications 21 à 23, **caractérisé par** une installation de refroidissement par compression (15, 16, 17).

25. Dispositif selon l'une des revendications 21 à 23, **caractérisé par** une installation de refroidissement par effet de Peltier (18, 19).

26. Dispositif selon l'une des revendications 21 à 25, **caractérisé par** un injecteur (5) alimenté par une source de CO₂ (8) et parcouru par l'eau potable.

27. Dispositif selon la revendication 26, **caractérisé en ce que** l'injecteur (5) est parcouru par de l'eau potable refroidie.

28. Dispositif selon la revendication 26 ou 27, **caractérisé en ce que** l'injecteur (5) se compose en tant que module d'une buse d'injecteur (5a) faisant saillie par son côté basse pression dans un tube mélangeur (5b).

29. Dispositif selon la revendication 28, **caractérisé en ce que** l'apport de CO₂ se fait de façon réglable dans le tube mélangeur (5b).

30. Dispositif selon la revendication 29, **caractérisé par** une soupape de régulation de débit (12) pour l'apport de CO₂ depuis un réservoir de stockage (8).

31. Dispositif selon l'une des revendications 21 à 30, **caractérisé par** une pompe de surpression (4).

32. Dispositif selon la revendication 31, **caractérisé en ce que** la pompe (4) est intercalée avant le parcours de carbonatation.

33. Dispositif selon l'une des revendications 21 à 32, **caractérisé par** un manostat (14) dans le parcours de carbonatation.

34. Dispositif selon la revendication 33, **caractérisé en ce que** le manostat (14) commute la pompe de surpression (4) en fonction du prélèvement d'eau potable.

35. Dispositif selon l'une des revendications 32 à 34, **caractérisé par** une armature anti-retour (7) entre la pompe de surpression (4) et l'injecteur (5).

36. Dispositif selon l'une des revendications 21 à 35, **caractérisé en ce que** la ligne de puisage est incorporée dans le parcours de carbonatation.

37. Dispositif selon l'une des revendications 21 à 36, **caractérisé par** un compensateur au niveau du robinet de puisage (soupape de puisage) (13) en tant que régulateur de pression destiné à optimiser le processus de mélange.

38. Dispositif selon l'une des revendications 21 à 37, **caractérisé par** un raccord sans vis du réservoir de stockage du CO₂ (8).

39. Dispositif selon l'une des revendications 21 à 38 en tant qu'appareil électroménager pour un consommateur final.

40. Dispositif selon l'une des revendications 21 à 39, **caractérisé par** une conception modulaire.

41. Dispositif selon la revendication 40, **caractérisé par** plusieurs modules d'alimentation en CO₂ (8, 11).

42. Dispositif selon la revendication 40 ou 41, **caractérisé en ce que** l'ensemble de l'installation de refroidissement (K) est conçu en tant qu'unité à modules.

43. Dispositif selon la revendication 42, **caractérisé en ce qu'**au moins deux modules d'alimentation en CO₂ sont raccordés simultanément au module de refroidissement.

44. Dispositif selon l'une des revendications 40 à 43, **caractérisé par** plusieurs robinets de puisage (soupapes de puisage) (13) en tant que points de prélèvement d'eau potable traitée.
